# EUROPEAN PATENT APPLICATION

(11) **EP 4 387 046 A1**
(43) Date of publication of application: **19.06.2024**
(21) Application number: 22873076.8
(22) Date of filing: 06.07.2022
(51) Int. Cl.: H02J 50/00, H02J 50/10, H01F 27/28, H01F 27/30, H01F 38/14, G06F 1/16, H02J 7/00

(54) **ELECTRONIC DEVICE COMPRISING COIL ASSEMBLY**

(30) Priority: 24.09.2021 KR 20210126254
(71) Applicant: Samsung Electronics Co., Ltd., Suwon-si, Gyeonggi-do 16677 (KR)
(72) Inventor: LEE, Seunghoon, Suwon-si Gyeonggi-do 16677 (KR); CHOI, Youngsik, Suwon-si Gyeonggi-do 16677 (KR)
(74) Representative: Appleyard Lees IP LLP
(86) International application number: PCT/KR2022/009750
(87) International publication number: WO 2023/048370

(57) **Abstract**

An electronic device, according to various embodiments disclosed in the present document, may comprise: a first cover plate, a rear plate including a second cover plate disposed so as to surround at least a portion of the first cover plate; a circuit board disposed inside the rear plate so as to face the first cover plate; a molding member disposed on the inner surface of the second cover plate inside the rear plate; and a coil assembly that is at least partially embedded in the molding member. Various other embodiments are possible.

## Description

### [Technical Field]

Various embodiments of the disclosure relate to an electronic device, and for example, to an electronic device including a coil assembly.

### [Background Art]

With the development of electronic, information, and communication technologies, a single electronic device now includes a variety of functions. For example, smartphones not only offer communication functionality but also incorporate functions such as a sound player, imaging device, and digital diary. Moreover, by installing additional applications, even more diverse functionalities can be realized on smartphones. An electronic device is capable of not only executing its installed applications or stored files, but also accessing a server or another electronic device through wired or wireless means, thereby receiving a variety of information in real-time.

As electronic devices have improved in performance and become smaller, carrying and using electronic devices has become more common, leading to the availability of various types of portable electronic devices. For example, a single user may carry and use multiple portable electronic devices, such as a smartphone, a tablet personal computer (PC), a smart watch, wireless earphones, and/or smart glasses. These various types of electronic devices include rechargeable batteries, which allows them to operate without external power sources, free from limitations of time or space within the range permitted by the battery capacity. Additionally, the battery can be recharged by connecting to an external power source when necessary.

The battery of the electronic device may be charged through either a wired or wireless method. While the wired charging method can provide stable power, it may become cumbersome for a single user who owns multiple portable electronic devices, as it requires connecting cables to each device. Moreover, since different electronic devices (for example, batteries) need to be charged sequentially, the charging process can take a considerable amount of time. In the wireless charging method, the power efficiency is somewhat lower than that of the wired charging method, but there is no need to physically connect a cable to the electronic device, and multiple electronic devices (e.g., two or more) can be charged simultaneously, which can reduce the charging time. Additionally, it is expected that the power efficiency of wireless charging will improve in the future, potentially nearing that of wired charging.

The above-described information may be provided as background art to aid in understanding the disclosure. No claims or decisions are made regarding whether any of the above-described contents can be applied as prior art related to the disclosure.

### [Detailed Description of the Invention]

### [Technical Problem]

The wireless charging method, as it does not require a separate connector or corresponding hole, can be advantageous for miniaturizing electronic devices while enabling external power supply, and it can increase the design freedom for the exterior design of the device. For instance, in wearable electronic devices shaped like wristwatches or glasses, wireless charging may be beneficial for both miniaturization and enhancing its appearance. In implementing this wireless charging function, stable wireless efficiency may be secured by including a resonator (e.g., a coil) of sufficient size or volume. However, securing space for a resonator can be challenging in wearable electronic devices which are miniaturized and lightweight for body wearing, or in wearable electronic devices shaped to conform to body contours. Consequently, there may be limitations in achieving wireless charging efficiency of a coil disposed in the limited space.

To address at least the mentioned problems and/or disadvantages and provide at least the advantages described below, various embodiments of the disclosure may provide an electronic device that includes a coil assembly that can be easily installed in a confined space.

Various embodiments of the disclosure may provide an electronic device including a coil assembly installed in a confined space yet while ensuring good wireless power transmission and reception efficiency.

Various embodiments of the disclosure may provide an electronic device that includes a coil assembly, which can enhance the utilization efficiency of internal space or design freedom.

Additional aspects according to various embodiments will be presented in detail through the following description, and some of these aspects may become partially apparent from the description or may be understood through the embodiments presented.

### [Technical Solution]

According to various embodiments of the disclosure, an electronic device may comprise a rear plate including a first cover plate and a second cover plate disposed to surround at least a portion of the first cover plate, a circuit board disposed to face the first cover plate inside the rear plate, a molding member disposed on an inner surface of the second cover plate inside the rear plate, and a coil assembly at least partially embedded in the molding member.

According to various embodiments of the disclosure, an electronic device, which is a wearable electronic device, may comprise: a housing including a front plate disposed to form a first surface, a rear plate disposed to form a second surface facing away from the first surface, and a side bezel structure disposed to surround a space between the front plate and the rear plate, at least one wearing member detachably coupled to the side bezel structure and configured to wear the side bezel structure or the electronic device on a user's body, and a circuit board disposed to face a first area of the rear plate on an inner surface of the rear plate, a molding member disposed to contact the inner surface of the rear plate in a curved area of the rear plate disposed around the first area, and a coil assembly including a coil at least partially surrounded by the molding member.

### [Advantageous Effects]

According to various embodiments of the disclosure, the coil assembly may be disposed separately from the circuit board, allowing it to be easily disposed in a space surrounded by a curved surface or in a narrow space inside the electronic device. For instance, installing other electronic components in the area surrounded by the curved surface can be challenging, but with the coil assembly disposed in this corresponding space, the internal space of the electronic device can be efficiently utilized. In another embodiment, the coil assembly may achieve good wireless power transmission/reception efficiency by providing a coil that is positioned substantially along the edge of the electronic device. This allows for additional space on the circuit board where other electronic components (e.g., various sensors) can be placed, enhancing design freedom.

### [Brief Description of Drawings]

The above and other aspects, features and advantages of various embodiments of the disclosure will be more apparent from the following detailed description taken in conjunction with the accompanying drawings, in which:
FIG. 1 is a block diagram illustrating an electronic device in a network environment according to various embodiments of the disclosure;
FIG. 2 is a front perspective view illustrating an electronic device according to various embodiments of the disclosure;
FIG. 3 is a rear perspective view illustrating the electronic device of FIG. 2;
FIG. 4 is an exploded perspective view illustrating the electronic device of FIG. 2;
FIG. 5 is an exploded perspective view illustrating a coil assembly and/or an arrangement of a coil assembly of an electronic device according to various embodiments of the disclosure;
FIG. 6 is a cross-sectional view illustrating a portion of an electronic device according to various embodiments of the disclosure;
FIG. 7 is a plan view illustrating an inner surface of a rear plate of an electronic device according to various embodiments of the disclosure;
FIG. 8 is a plan view illustrating a circuit board disposed on a rear plate when viewed from the exterior of an electronic device according to various embodiments of the disclosure;
FIG. 9 is a plan view illustrating an outer surface of a rear plate of an electronic device according to various embodiments of the disclosure;
FIG. 10 is a plan view illustrating a coil assembly of an electronic device according to various embodiments of the disclosure;
FIG. 11 is a bottom view illustrating a state in which a coil assembly of an electronic device according to various embodiments of the disclosure is coupled to a molding member;
FIG. 12 is a bottom view illustrating a coil assembly disposed on a rear plate of an electronic device according to various embodiments of the disclosure; and
FIG. 13 is an enlarged view illustrating a portion indicated by 'E' of FIG. 6.

Throughout the accompanying drawings, like reference numerals may be assigned to like parts, components, and/or structures.

### [Mode for Carrying out the Invention]

The following description taken in conjunction with the accompanying drawings may be presented to provide a comprehensive understanding of various implementations of the disclosure as defined by the claims and equivalents thereto. The specific embodiments disclosed in the following description entail various specific details to aid understanding, but are regarded as one of various embodiments. Accordingly, it will be apparent to those skilled in the art that various changes and modifications may be made to the various implementations described in the disclosure without departing from the scope and spirit of the disclosure. Further, descriptions of well-known functions and configurations may be omitted for clarity and brevity.

The terms and words used in the following description and claims are not limited to the bibliographical meaning, but may be used to clearly and consistently describe the various embodiments of the disclosure. Therefore, it will be apparent to those skilled in the art that the following description of various implementations of the disclosure is provided only for the purpose of description, not for the purpose of limiting the disclosure defined as the scope of the claims and equivalent thereto.

The singular forms "a," "an," and "the" are intended to include the plural forms as well, unless the context clearly indicates otherwise. Thus, as an example, "a component surface" may be interpreted as including one or more of the surfaces of a component.

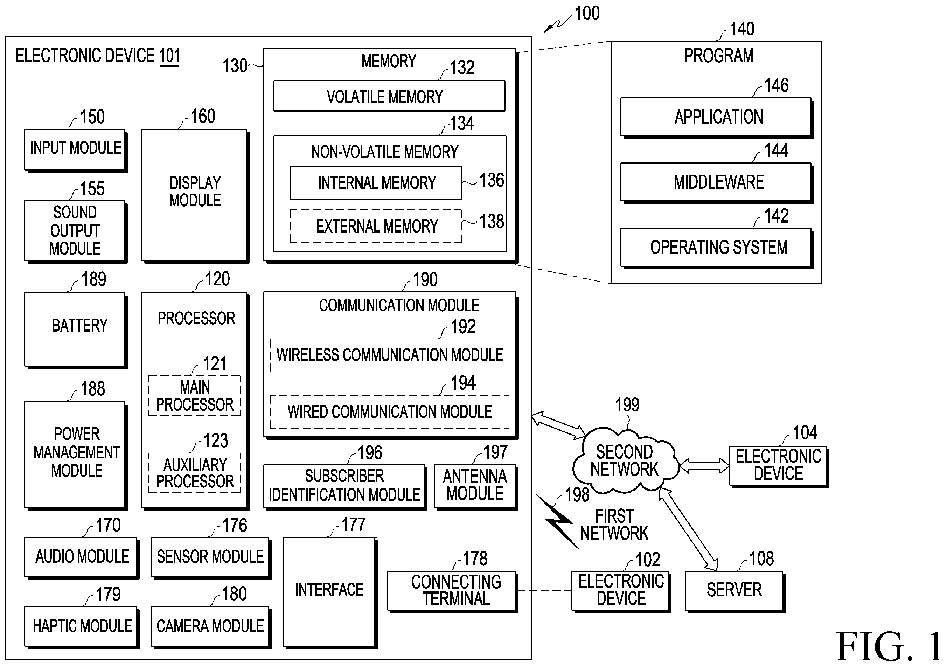

FIG. 1 is a block diagram illustrating an electronic device in a network environment 100 according to various embodiments of the disclosure. Referring to FIG. 1, the electronic device 101 in the network environment 100 may communicate with an external electronic device 102 via a first network 198 (e.g., a short-range wireless communication network), or an external electronic device 104 or a server 108 via a second network 199 (e.g., a long-range wireless communication network). According to an embodiment, the electronic device 101 may communicate with the external electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. In an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a second sensor module configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the external electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the external electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or clientserver computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of devices. The electronic devices may include, for example, a portable communication device (e.g., a smartphone), a computer device, a portable multimedia device, a portable medical device, a camera, a wearable device, or a home appliance. The electronic devices according to an embodiment are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or further, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

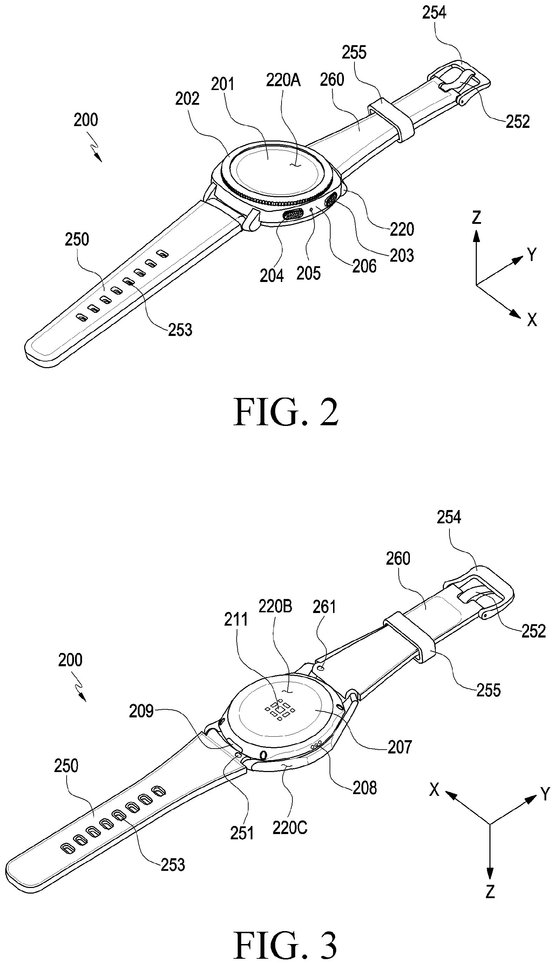

FIG. 2 is a front perspective view illustrating an electronic device 200 (e.g., the electronic devices 101, 102, and 104 of FIG. 1) according to various embodiments of the disclosure. FIG. 3 is a rear perspective view illustrating the electronic device 200 of FIG. 2.

In the following detailed description in FIGS. 2 to 4, the `width direction or length direction of the electronic device 200 or the housing 220' may be any one of the X-axis direction and the Y-axis direction of the illustrated orthogonal coordinate system. When it is necessary to distinguish the width direction or the length direction, the direction of the orthogonal coordinate system illustrated in the drawings may be labeled together. In the orthogonal coordinate system of FIGS. 2 to 4, the `Z-axis direction' may mean a thickness direction of the electronic device 200 or the housing 220. In an embodiment, the direction in which the front surface (e.g., the first surface 220A of FIG. 2) of the electronic device 200 or the housing 220 faces may be defined as a `first direction' or a `+Z direction', and the direction in which the rear surface (e.g., the second surface 220B of FIG. 3) of the electronic device 200 or the housing 220 faces may be defined as a 'second direction' or a `-Z direction'.

Referring to FIGS. 2 and 3, the electronic device 200 according to an embodiment may include a housing 220 including a first surface (or a front surface) 220A, a second surface (or a rear surface) 220B, and a side surface 220C surrounding a space between the first surface 220A and the second surface 220B and wearing members 250 and 260 connected to at least a portion of the housing 220 and configured to allow the electronic device 200 or the housing 220 to be worn on the user's body part (e.g., a wrist or ankle). According to another embodiment (not shown), the housing may denote a structure forming part of the first surface 220A, the second surface 220B, and the side surfaces 220C of FIG. 2. According to an embodiment, at least part of the first surface 220A may have a substantially transparent front plate 201 (e.g., a glass plate or polymer plate including various coat layers). The second surface 220B may be formed by a rear plate 207 that is substantially opaque. According to an embodiment, when the electronic device may include a sensor module 211 disposed on the second surface 220B, the rear plate 207 may at least partially include a transparent area. The rear plate 207 may be formed of, e.g., laminated or colored glass, ceramic, polymer, metal (e.g., aluminum, stainless steel (STS), or magnesium), or a combination of at least two thereof. The side surface 220C may be formed by a side bezel structure (or a "side member") 206 that couples to the front plate 201 and the rear plate 207 and includes metal and/or polymer. In some embodiments, the rear plate 207 and the side bezel plate 206 may be integrally formed together and include the same material (e.g., metal, such as aluminum). The wearing members 250 and 260 may be formed of various materials in various shapes. A uni-body structure or multiple unit links, which are configured to be movable, may be formed of fabric, leather, rubber, urethane, metal, ceramic, or a combination of at least two thereof.

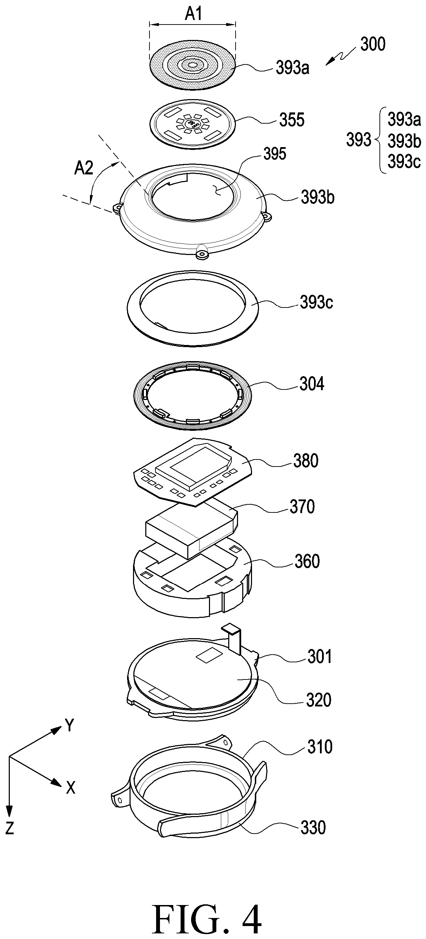

According to an embodiment, the electronic device 200 may include at least one or more of a display 320 (refer to FIG. 4), audio modules 205 and 208, a sensor module 211, key input devices 202, 203, and 204, and a connector hole 209. In some embodiments, the electronic device 200 may exclude at least one (e.g., the key input devices 202, 203, and 204, connector hole 209, or sensor module 211) of the components or may add other components.

The display (e.g., the display 320 of FIG. 4) may be exposed, for example, through a significant portion of the front plate 201. The display 320 may have a shape corresponding to the shape of the front plate 201, e.g., a circle, ellipse, or polygon. The display 320 may be coupled with, or disposed adjacent, a touch detection circuit, a pressure sensor capable of measuring the strength (pressure) of touches, and/or fingerprint sensor.

The audio modules 205 and 208 may include a microphone hole 205 and a speaker hole 208. The microphone hole 205 may have a microphone inside to obtain external sounds. In some embodiments, there may be a plurality of microphones to be able to detect the direction of a sound. The speaker hole 208 may be used for an external speaker or a receiver for phone talks. In some embodiments, a speaker may be included without the speaker hole (e.g., a piezo speaker).

The sensor module 211 may produce an electrical signal or data value corresponding to the internal operation state or external environment state of the electronic device 200. The sensor module 211 may include, e.g., a biometric sensor module 211 (e.g., a heart-rate monitor (HRM) sensor) disposed on the second surface 220B of the housing 220. The electronic device 200 may include a sensor module not shown, e.g., at least one of a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

The key input devices 202, 203, and 204 may include a wheel key 202 disposed on the first surface 220A of the housing 220 to be rotatable in at least one direction and/or key buttons 203 and 204 disposed on the side surface 220C of the housing 220. The wheel key 202 may have a shape corresponding to the shape of the front plate 201. In another embodiment, the electronic device 200 may exclude all or some of the above-mentioned key input devices 202, 203, and 204 and the excluded key input devices 202, 203, and 204 may be implemented in other forms, e.g., as soft keys on the display 320. The connector hole 209 may receive a connector (e.g., a universal serial bus (USB) connector) for transmitting and receiving power and/or data to/from an external electronic device. Another connector hole (not shown) may be included for receiving a connector for transmitting and receiving audio signals to/from the external electronic device. The electronic device 200 may further include a connector cover (not shown) to cover at least part of, e.g., the connector hole 209 and preventing external materials from entering the connector hole.

The wearing members 250 and 260 may detachably be fastened to at least portions of the housing 220 via locking members 251 and 261. The locking members 251 and 261 may include components for coupling, such as pogo pins, and, according to an embodiment, may be replaced with protrusions or recesses formed on/in the wearing members 250 and 260. For example, the wearing members 250 and 260 may be coupled in such a manner as to be fitted into or over the recesses or protrusions formed on the housing 220. The wearing members 250 and 260 may include one or more of a fastening member 252, fastening member coupling holes 253, a band guide member 254, and a band fastening ring 255.

The fastening member 252 may be configured to allow the housing 220 and the wearing members 250 and 260 to be fastened to the user's body portion (e.g., wrist or ankle). The fastening member coupling holes 253 may fasten the housing 220 and the wearing members 250 and 260 to the user's body portion, corresponding to the fastening member 252. The band guide member 254 may be configured to restrict the movement of the fastening member 252 within a specific range when the fastening member 252 is fitted into the fastening member coupling hole 253, thereby allowing the wearing members 250 and 260 to securely adhere to the user's body. The band fastening ring 255 may limit the range of movement of the wearing members 250 and 260, with the fastening member 252 fitted into the fastening member coupling hole 253.

FIG. 4 is an exploded perspective view illustrating the electronic device of FIG. 2.

Referring to FIG. 4, an electronic device 200, 300 may include a side bezel structure 310, a wheel key 330, a front plate 301 (e.g., the front plate 201 of FIG. 2), a display, a first antenna , a second antenna (e.g., the coil board 380), a support member 360 (e.g., a bracket), a battery 370, a printed circuit board 380 (e.g., the main circuit board), a sealing member(not shown), a rear plate 393, and wearing members 395 and 397 (e.g., the wearing members 250 and 260 of FIG. 2 of FIG. 3). At least one of the components of the electronic device 200, 300 may be the same or similar to at least one of the components of the electronic device 200 of FIG. 2 or 3 and duplicate description will be omitted below. The support member 360 may be disposed inside the electronic device 200, 300 to be connected with the side bezel structure 310 or integrated with the side bezel structure 310. The support member 360 may be formed of, e.g., metal and/or nonmetal material (e.g., polymer). The display 320 may be joined onto one surface of the support member 360, and the printed circuit board 380 may be joined onto the opposite surface of the supporting member. A processor, memory, and/or interface may be mounted on the printed circuit board 380. The processor may include one or more of, e.g., a central processing unit, an application processor, a graphic processing unit (GPU), a sensor processor, or a communication processor.

The memory may include, e.g., a volatile or non-volatile memory. The interface may include, e.g., a high-definition multimedia interface (HDMI), a universal serial bus (USB) interface, a secure digital (SD) card interface, and/or an audio interface. The interface may electrically or physically connect, e.g., the electronic device 200, 300 with an external electronic device and may include a USB connector, an SD card/multimedia card (MMC) connector, or an audio connector.

The battery 370, which is a device for supplying power to at least one component of the electronic device 200, 300, may include, e.g., a primary cell which is not rechargeable, a secondary cell which is rechargeable, or a fuel cell. At least a portion of the battery 370 may be disposed on substantially the same plane as the printed circuit board 380. The battery 370 may be integrally or detachably disposed inside the electronic device 200, 300.

When the side bezel structure 310 or the support member 360 includes metal material, the first antenna may utilize, for example, at least a portion of the side bezel structure 310 and/or the support member 360 as a radiating conductor. For example, the processor (e.g., the processor 120 of FIG. 1) or the communication module (e.g., the communication module 190 of FIG. 1) may be configured to perform wireless communication using at least a portion of the side bezel structure 310 and/or the support member 360. In some embodiments, the first antenna (not shown) may be disposed between the display 320 and the support member 360. The first antenna may include, e.g., a near-field communication (NFC) antenna, a wireless charging antenna, and/or a magnetic secure transmission (MST) antenna. The first antenna may perform short-range communication with an external device, wirelessly transmit/receive power necessary for charging, or transmit magnetic-based signals including payment data or short-range communication signals. In another embodiment, an antenna structure formed by a part or combination of the side bezel structure 310 and/or the support member 360 may be combined with an antenna structure (not shown) disposed between the display 320 and the support member 360. In yet another embodiment, the antenna structure by the side bezel structure 310 and/or the support member 360, and an antenna structure disposed between the display 320 and the support member 360, may be utilized for wireless communication functions according to different communication protocols.

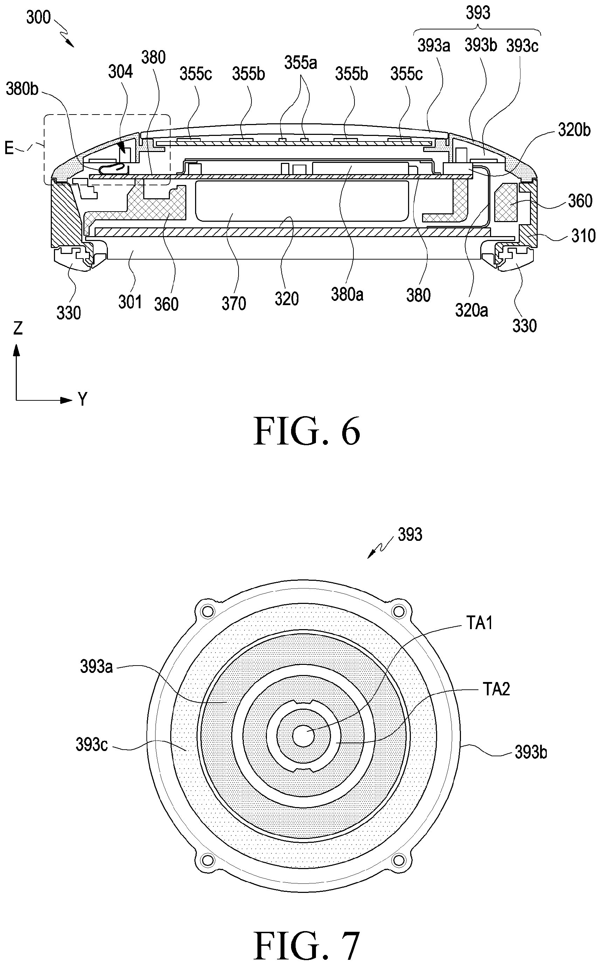

The auxiliary circuit board 355 may be disposed between the printed circuit board 380 and the rear plate 393 and/or in the space surrounded by the side bezel structure 310. The auxiliary circuit board 355 may include a second antenna, e.g., a near-field communication (NFC) antenna, a wireless charging antenna, and/or a magnetic secure transmission (MST) antenna. In various embodiments of the disclosure, a second antenna may be implemented as a coil assembly 304 separated from the auxiliary circuit board 355. The printed circuit board 380 and/or auxiliary circuit board 355 may use a second antenna, for example, to perform a near-field communication with an external device, wireless transmit and receive power required for charging, and transmit a near-field communication signal or a magnetic-based signal containing payment data. In another embodiment, an antenna structure may be formed by a portion of the side bezel structure 310 and/or the rear plate 393 or a combination thereof. In various embodiments, when the electronic devices 200, 300 (e.g., the electronic device 200 of Figs. 2 and 3) comprise a sensor module (e.g., the sensor module 211 of Fig. 2), the sensor circuit disposed on the auxiliary circuit board 355 or a separate sensor element from the auxiliary circuit board 355 may be disposed. The sensor circuit or sensor element may include a light emitting element, a photoelectric conversion element, or an electrode pad, e.g., a combination of elements designated as `355a', `355b' and/or '355c' in FIG. 6. For example, an electronic component (e.g., the auxiliary circuit board 355 of FIGS. 4 or 6) provided as the sensor module 211 may be disposed between the printed circuit board 380 and the rear plate 393.

According to various embodiments, the rear plate 393 may include a first cover plate 393a and a second cover plate 393b disposed to surround at least part of the first cover plate 393a. In some embodiments, when viewed in the Z-axis direction, the second cover plate 393b may have a loop shape forming or defining an opening area 395, and the first cover plate 393a may be disposed in the opening area 395. In the illustrated embodiment, the second cover plate 393b is substantially circular in shape when viewed in the Z-axis direction, but the various embodiments disclosed herein are not limited thereto, and the second cover plate 393b may have a polygonal loop shape. In an embodiment, the first cover plate 393a may be coupled to the second cover plate 393b by an adhesive member or a sealing member such as double-sided tape, and a sealing structure or waterproofing structure may be formed in the opening area 395, for example, between the first cover plate 393a and the second cover plate 393b.

According to various embodiments, the electronic device 200, 300 or the rear plate 393 may further include a molding member 393c disposed on the inner surface of the second cover plate 393b, in the inside thereof. According to an embodiment, the molding member 393c may be described as part of the coil assembly 304. The molding member 393c, e.g., may be molded of a transparent or translucent synthetic resin, and in an embodiment, the molding member 393c may be disposed to be in contact with the inner surface of the second cover plate 393b as the second cover plate 393b is molded by insert injection. In another embodiment, the second cover plate 393b and the molding member 393c may be manufactured in separate processes, and may be coupled to each other through assembly or attachment processes.

According to an embodiment, the coil assembly 304 may be at least partially embedded in the molding member 393c, and may be configured to generate an induced current in response to an external electromagnetic field. In an embodiment, the coil assembly 304 may be electrically connected to the printed circuit board 380 or the auxiliary circuit board 355, and the electronic device 200, 300 may use the induced current generated by the coil assembly 304 as a power source, or to charge the battery 370. In some embodiments, the molding member 393c may be molded in a state where the coil assembly 304 is disposed in the mold for forming the molding member 393c. For example, at the same time as the molding member 393c is molded, the coil assembly 304 may be coupled or fixed to the molding member 393c, while being at least partially surrounded by the molding member 393c.

According to various embodiments, the auxiliary circuit board 355 may be disposed facing a first area A1 of the rear plate 393 (e.g., the first cover plate 393a). For example, the auxiliary circuit board 355 may be disposed in the opening area 395 and be surrounded by the second cover plate 393b or the molding member 393c. In some embodiments, the second cover plate 393b may provide a curved area A2 located around the first area A1, and the coil assembly 304 may be disposed in the curved area A2 provided by the second cover plate 393b around the area (e.g., the opening area 395 or the first area A1) where the auxiliary circuit board 355 is disposed.

According to various embodiments, when a portion of the electronic device 200, 300 (e.g., rear plate 393) is provided as a curved area A2, the coil assembly 304 separated from the auxiliary circuit board 355 may be disposed in the space surrounded by the curved area A2. For example, the auxiliary circuit board 355 may be disposed closer to the first cover plate 393a than coil assembly 304. In an embodiment, the auxiliary circuit board 355 may include a sensor that uses the light-emitting element 355a (see FIG. 6) or the photoelectric conversion element(s) 355b, 355c (see FIG. 6) in combination or a sensor (e.g., the sensor module 211 in FIG. 3) that uses an electronic pad (not shown), and the electronic device 200, 300 may detect user biometric information using these sensors. In detecting biometric information, since the auxiliary circuit board 355 is disposed closer to the first cover plate 393a, the accuracy of the detected biometric information can be further improved if power consumption is the same. Further details on this matter will be described in more depth by referring to FIG. 6.

According to various embodiments, a sensor (e.g., the sensor module 211 of FIG. 3) disposed on the auxiliary circuit board 355 may detect user biometric information, for example, such as a user's photo plethysmo graphy (PPG), sleep section, skin temperature, heart rate or an electrocardiogram, and the detected biometric information may be stored in the electronic device 200, 300 (e.g., memory 134 of FIG. 1) or transmitted in real-time to a medical institution, and thus may be used for the user's health management. In transmitting the detected biometric information, a processor (e.g., the processor 120 of FIG. 1) and/or a communication module (e.g., the communication module 190 of FIG. 1) may utilize the antenna described above, e.g., a part of the side bezel structure 310 or a support member 360, the antenna structure disposed between the display 320 and the support member 360, and/or the coil assembly 304, as an antenna.

Although not illustrated, the sealing member may be positioned between the side bezel structure 310 and the rear plate 393. The sealing member may be configured to block moisture and foreign materials entering the space surrounded by the side bezel structure 310 and the rear plate 393 from the outside. In some embodiments, the sealing member may include a double-sided tape disposed between the side bezel structure 310 and the front plate 301, and/or an O-ring made of a rubber material, which is provided between the side bezel structure 310 and the rear plate 393.

According to various embodiments, the electronic devices 200, 300 may include a wireless charging circuit (e.g., a wireless charging circuit provided as a part of the power management module 188 and/or processor 120 of FIG. 1) and the coil assembly 304. In an embodiment, the coil assembly 304 may generate an induced current in response to an external electromagnetic field, and the wireless charging circuit may supply power to the electronic devices 200, 300 or charge the battery 370 by using the induced current generated by coil assembly 304.

In relation to the following embodiments, the above-described electronic device 101, 102, 104, 200, 300 in FIGS. 1 to 4 may be referred to, and in relation to configurations which can be easily understood through the above-described embodiments, the reference numerals in drawings may be identically assigned or be omitted, and detailed descriptions thereof may also be omitted.

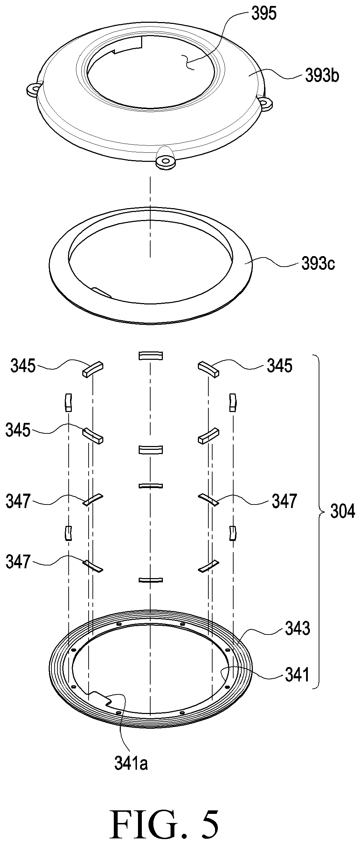

FIG. 5 is an exploded perspective view for illustrating the coil assembly 304 (e.g., the coil assembly 304 of FIG. 4) of the electronic device (e.g., the electronic device 101, 102, 104, 200, 300 of FIGS. 1 to 4), and/or the arrangement of the coil assembly 304, according to the various embodiments of the disclosure.

Referring to FIG. 5, the coil assembly 304 may include a base plate 341, a coil 343, and/or at least one magnet 345. The base plate 341 is in a loop shape and may be disposed to surround the area where the auxiliary circuit board 355 is disposed, when viewed from a direction perpendicular to the rear plate 393, e.g., one side of the first cover plate 393a (e.g., in the Z-axis direction of FIGS. 2 to 4). In an embodiment, the base plate 341 may serve as a structure for placing the coil 343 or magnet 345, and the coil 343 and magnet 345 may be disposed on one side of base plate 341. From one side of the base plate 341, the magnet 345 may be disposed within the area surrounded by the coil 343. For example, in the electronic device 300 with a shape or structure where the edge is thinner than the central portion, the coil assembly 304 can be easily disposed in the edge area or space by placing the coil 343 on the edge side of the electronic device 300 relative to the magnet 345.

According to various embodiments, the coil 343 or magnet 345 may be disposed on a surface facing the inner side of the second cover plate 393b when viewed from the base plate 341. In some embodiments, the coil 343 may be a conductor formed in a spiral shape, and may be disposed in a closed-loop shape at the edge of the base plate 341. In another embodiment, the magnet 345 may be disposed adjacent to the coil 343 within an area substantially surrounded by coil 343. In an embodiment, the coil assembly 304 may have a single magnet with a ring shape or may include a plurality of magnets 345 disposed at specified angular intervals along a loop trajectory. In the illustrated embodiment, eight magnets 345 may be attached to the base plate 341 by double-sided tape 347, and the magnets 345 may be disposed at equal angular intervals.

According to various embodiments, FIG. 5 illustrates a structure in which the second cover plate 393b, the molding member 393c, and/or the coil assembly 304 are separated. However, as the molding member 393c and the second cover plate 393b are sequentially molded, the coil assembly 304 may be disposed on the rear plate 393. For example, the second cover plate 393b, the molding member 393c, and/or coil assembly 304 may be integrally formed or fabricated. According to an embodiment, with the coil 343 and magnet 345 disposed on the base plate 341, the coil assembly 304 may be disposed in a mold, and at the same time as the molding member 393c is molded, the coil 343 and the magnet 345 may be at least partially surrounded by the molding member 393c. For example, the coil assembly 304 may be assembled with the molding member 393c concurrently as the molding member 393c is molded. In some embodiments, the base plate 341 may form a portion of the surface of the molding member 393c. For example, the coil 343 and the magnet 345 may be surrounded by the molding member 393c, and a portion of the base plate 341 may be exposed on the exterior of the molding member 393c.

According to various embodiments, the second cover plate 393b may be in the shape of a loop forming or defining the opening area 395 and may be formed to surround at least a portion of the molding member 393c on the inner surface or around the opening area 395. In an embodiment, the first cover plate 393a of FIG. 4 may be disposed in the opening area 395, and the first cover plate 393a may at least partially transmit light. According to an embodiment, the second cover plate 393b may be molded in a different mold in which the molding member 393c is disposed, and the molding member 393c may be coupled in contact with the inner surface of the second cover plate 393b at the same time as the molding of the second cover plate 393b. In some embodiments, after the second cover plate 393b separate from the molding member 393c is molded, the molding member 393c may be coupled to the second cover plate 393b during an assembly or attachment process. In some embodiments, the second cover plate 393b may be coupled to a side bezel structure (e.g., the side bezel structure 310 of FIG. 4) by a fastening member (not shown) such as a screw, and a sealing member may be disposed between the first cover plate 393a and the side bezel structure 310 to form a waterproof structure.

FIG. 6 is a cross-sectional view illustrating a portion of an electronic device (e.g., the electronic devices 101, 102, 104, 200, and 300 of FIGS. 1 to 4) according to an embodiment of the disclosure. In describing the embodiment of FIG. 6, reference may be made to the embodiment of FIGS. 1 to 4 with respect to the electronic device, and reference may be made to the embodiment of FIG. 5 with respect to the coil assembly.

Referring to FIG. 6, the electronic device 300 may include a rear plate 393 (e.g., the first cover plate 393a), an auxiliary circuit board 355, a coil assembly 304, a printed circuit board 380, a battery 370, a display 320, and a front plate 301, which are sequentially arranged in the Z-axis direction, a side bezel structure 310 surrounding a space between the front plate 301 and the rear plate 393, and a support member 360 providing a space in which the battery 370 is disposed between the display 320 and the printed circuit board 380. In an embodiment, at least some of the components described with reference to FIG. 1 may be disposed on the printed circuit board 380 in the form of electronic component(s), such as an integrated circuit chip 380a.

Although not assigned a reference numeral, the electronic device 300 may include a shielding member for mitigating or preventing electromagnetic interference occurring among electronic components, and the shielding member may be disposed to surround at least some of the electronic components 380a on the printed circuit board 380. In an embodiment, the auxiliary circuit board 355 and/or the display 320 may be electrically connected to the printed circuit board 380 through a wiring structure such as the flexible printed circuit board 320a or the connector 320b, and a connection member 380b such as a C-clip may be disposed on the printed circuit board 380 to electrically connect the coil assembly 304 to the printed circuit board 380.

According to various embodiments, the electronic device 300 may include a rear plate 393 (e.g., the first cover plate 393a), an auxiliary circuit board 355, and/or a coil assembly 304, which are sequentially disposed along a direction (e.g., the Z-axis direction) perpendicular to one surface of the rear plate 393. The light emitting element 355a and/or the photoelectric conversion element(s) 355b and 355c may be disposed on the auxiliary circuit board 355 while facing the first cover plate 393a. The light emitting element 355a may emit, for example, near-infrared light, infrared light, and/or green light, and the photoelectric conversion element(s) 355b and 355c may receive or detect light in a specified wavelength band.

According to various embodiments, the electronic device 300 may selectively combine the light emitting elements 355a and/or the photoelectric conversion element(s) 355b and 355c to be used as a sensor for detecting user biometric information. In another embodiment, the electronic device 300 may use the photoelectric conversion element(s) 355b and 355c as sensors for detecting user biometric information without using the light emitting element 355. In yet another embodiment, the electronic device 300 may include a pressure sensor (not shown) as a sensor for detecting user biometric information. In some embodiments, the first cover plate 393a may transmit at least a portion of light emitted or received by the light emitting elements 355a and the photoelectric conversion element(s) 355b and 355c.

According to various embodiments, the auxiliary circuit board 355 and/or the coil assembly 304 may be disposed between the rear plate 393 and the printed circuit board 380. In an embodiment, the auxiliary circuit board 355 may be disposed to substantially face the first cover plate 393a, and the coil assembly 304 may be disposed in a space provided by a curved area (e.g., the curved area A2 or the second cover plate 393b of FIG. 4) of the rear plate 393. For example, the coil assembly 304 may be separated from the auxiliary circuit board 355, which may enhance the utilization efficiency of the internal space of the electronic device 300 or design flexibility of the auxiliary circuit board 355. In another embodiment, the separation of the coil assembly 304 may result in increased sensitivity of the sensor(s) disposed on the auxiliary circuit board 355 or improved accuracy of the information detected by the sensor(s).

### 1. Utilization Efficiency of Internal Space 1

A wearable electronic device (e.g., the electronic device 300) used while worn on a body may be used as an accessory that may serve as a user's preferences or personality. For example, to beautify its appearance, the electronic device 300 may include various types of curved surfaces or contours. These curved surfaces or contours may hinder the layout, size, or shape design of built-in components (e.g., the printed circuit board 380, the auxiliary circuit board 355, the display 320, and/or the battery 370). According to an embodiment, the coil assembly 304 may be substantially designed or manufactured in various shapes, provided that the width and length of the coil 343 and the gap between different sections where current flows are secured. For example, the coil assembly 304 may be easily disposed in an edge portion (e.g., a curved area A2 or a contoured area provided by the second cover plate 393b) of the electronic device 300. For example, by being manufactured as a separate or independent component from other internal component(s) such as the auxiliary circuit board 355, the coil assembly 304 may be easily disposed in a space at least surrounded by the curved area A2, for example, in a narrow space where other internal components cannot be disposed.

### 2. Design Freedom of the Auxiliary Circuit Board

According to an embodiment, when the coil assembly 304 is used for wireless charging, for instance, when generating an induced current in response to an external electromagnetic field, the efficiency of power transmission and reception in wireless charging can be improved when the coil assembly 304 is disposed closer to the external space. In some embodiments, the auxiliary circuit board 355 may include a sensor for detecting biometric information and may be disposed adjacent to the first cover plate 393a. For example, to increase power transmission efficiency in wireless charging, the coil 343 may be disposed on the auxiliary circuit board 355 to be close to the external space. However, in a structure in which the rear plate 393 includes the curved area A2, when expanding the auxiliary circuit board 355 to accommodate the coil 343, the gap between the first cover plate 393a and the auxiliary circuit board 355 may increase. The gap between the first cover plate 393a and the auxiliary circuit board 355 may influence the accuracy of detecting biometric information. In another embodiment, the coil 343 may be disposed without expanding the auxiliary circuit board 355, however, the area available for placing the light emitting elements 355a or the photoelectric conversion element(s) 355b and 355c may be reduced as much as the coil 343 occupies.

According to various embodiments, the coil assembly 304, separated from the auxiliary circuit board 355, is disposed in the curved area A2 (e.g., an area at least partially surrounded by the second cover plate 393b), making it easier to secure an area for disposing a sensor on the auxiliary circuit board 355, and the auxiliary circuit board 355 may be disposed adjacent to the first cover plate 393c.

### 3. Accuracy in Detecting Biometric Information

As mentioned earlier, when a sensor including the light emitting element 355a or the photoelectric conversion element(s) 355b and 355c is disposed on the auxiliary circuit board 355, and detects information about the external environment or the user's biometric information through the first cover plate 393a, the accuracy of the detected information may be higher as the auxiliary circuit board 355 is closer to the first cover plate 393. In an embodiment, while the electronic device 300 is worn on the user's body, the rear plate 393 (e.g., at least a portion of the first cover plate 393a) may come into contact with the user's body, and when there is a need or command for detecting biometric information, the processor (e.g., the processor 120 of FIG. 1) may emit light using the light emitting element 355a and may detect light reflected by the user's body using the photoelectric conversion element(s) 355b and 355c. The term "reflected light" may refer to the light reflected by the user's body in an area that is substantially in contact with the rear plate 393. The electronic device 300 and/or the processor (e.g., the processor 120 of FIG. 1) may detect or determine user biometric information based on the emitted light and/or the detected light. Although not illustrated, the electronic device 300 may further include an electrode pad or a pressure sensor exposed to the outside of the first cover plate 393, and the auxiliary circuit board 355 may be electrically connected to the electrode pad or the pressure sensor. For example, the electrode pad or the pressure sensor may be used to detect user biometric information (e.g., electrocardiogram, blood pressure, and/or heart rate) by directly contacting the user's body.

According to various embodiments, in a structure in which light is emitted or received through the first cover plate 393a, the closer the distance between the light emitting element 355a and the user's body or the distance between the user's body and the photoelectric conversion element(s) 355b and 355c, the higher the accuracy of the detected information. In another embodiment, when the detected information has the same accuracy, the smaller the gap between the first cover plate 393a and the auxiliary circuit board 35, the lower the power consumption in biometric information detection. For instance, by separating the coil assembly 304 from the auxiliary circuit board 355, the auxiliary circuit board 355 may secure more space for placing the sensor(s) or be disposed closer to the first cover plate 393a. In an embodiment, the auxiliary circuit board 355 may include a greater variety of sensors to detect various pieces of user biometric information, or be disposed in close proximity to the first cover plate 393a to improve the accuracy of the detected biometric information.

### 4. Utilization Efficiency of Internal Space 2

According to an embodiment, in the arrangement of the coil assembly 304, the magnet 345 may be disposed in an area surrounded by the coil 343, thereby improving utilization efficiency of the internal space. For instance, in FIG. 6, the length or thickness measured along the Z-axis direction may be greater in the magnet 345 than in the coil 343, and in the curved area (e.g., the curved area A2 of FIG. 4) provided by the second cover plate 393b, the magnet 345 may be disposed at a position where there is more free space in the Z-axis direction. In an embodiment, the length or thickness of the curved area A2 along the Z-axis direction may increase as the curved area A2 moves away from the edge. For example, the electronic device may have a greater length or thickness in the Z-axis direction at the central portion than at the edge. The coil 343 may be disposed in a substantially flat shape, and the magnet 345 may have a specified width, length, and/or thickness. In various embodiments disclosed herein, by placing the magnet 345 having a greater thickness in the Z-axis direction than the coil 343 inside the coil 343, the coil assembly 304 may be easily disposed inside the second cover plate 393b (e.g., a space at least partially surrounded by the curved area A2 of FIG. 4).

According to various embodiments, when the coil assembly 304 is utilized for wireless charging functions (e.g., wireless power reception), the magnet 345 may align the coil assembly 304 (e.g., the coil 343) with a primary coil on the power transmission side. For instance, a magnetic body or another magnet corresponding to the magnet 345 may be provided in the wireless power transmitter, allowing the coil 343 to be aligned with the primary coil on the transmission-side due to the magnetic force generated between the magnet 345 and the transmission-side magnetic body (or another magnet). In some embodiments, even when the magnet 345 is embedded in the molding member 393c, by having a specified size or volume while disposed in a narrow space, it can properly align the coil (343) with the primary coil on the transmitting side, thus enhancing power efficiency in wireless power transmission and reception.

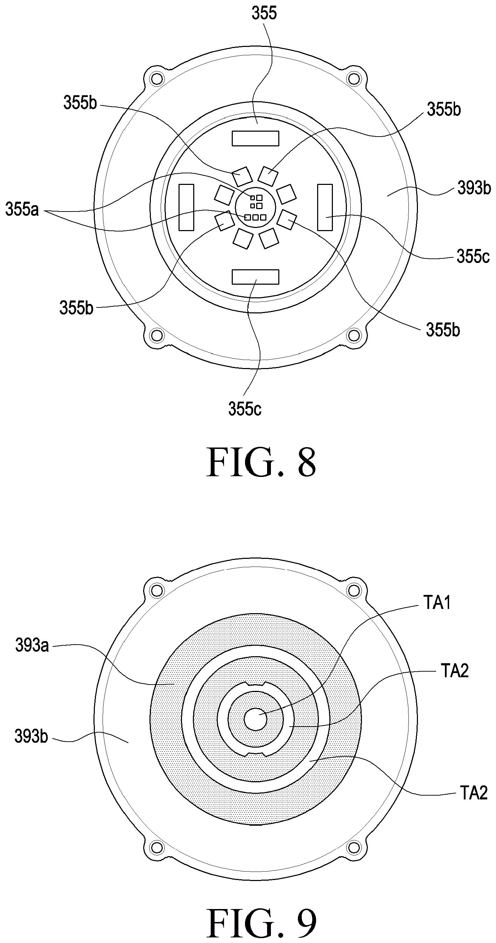

FIG. 7 is a plan view illustrating an inner surface of a rear plate 393 of an electronic device (e.g., the electronic device 101, 102, 104, 200, or 300 of FIGS. 1, 4, or 6) according to various embodiments of the disclosure. FIG. 8 is a plan view illustrating a circuit board 355 disposed on a rear plate 393 when viewed from the outside of an electronic device 300 according to various embodiments of the disclosure. FIG. 9 is a plan view illustrating an outer surface of a rear plate 393 of an electronic device 300 according to various embodiments of the disclosure.

Referring to FIGS. 7 to 9, the auxiliary circuit board 355 may be disposed to face the first cover plate 393a on the inner surface of the rear plate 393, and the second cover plate 393b and/or the molding member 393c may be disposed around the auxiliary circuit board 355. In an embodiment, the first cover plate 393a may be coupled to the second cover plate 393b in an opening area (e.g., the opening area 395 of FIG. 5). The molding member 393c may be integrally formed with the second cover plate 393b by insert injection molding. For example, the second cover plate 393b may be molded and coupled to the molding member 393c simultaneously by injecting a molten resin while the molding member 393c is disposed in the mold. Although omitted in FIG. 7, the coil assembly (e.g., the coil assembly 304 in FIGS. 5 or 6) may be at least partially embedded in the molding member 393c, and may be disposed in the molding member 393c at the same time as the molding of the molding member 393c.

According to various embodiments, the auxiliary circuit board 355 may include a plurality of light emitting elements 355a and a plurality of photoelectric conversion element(s) 355b and 355c, and the photoelectric conversion element(s) 355b and 355c may be referred to as light receiving elements according to an embodiment. According to an embodiment, the sensor for detecting biometric information may include a selective combination of the light emitting elements 355a and the photoelectric conversion element(s) 355b and 355c. For example, while the user wears the electronic device 300, the rear plate 393 (e.g., the first cover plate 393a) may come into contact with the user's body, and light emitted from at least one of the light emitting elements 355a may pass through the first cover plate 393a to be emitted to the user's body. At least a portion of the light incident on the user's body may be reflected and detected by at least one of the photoelectric conversion element(s) 355b and 355c through the first cover plate. The electronic device 300 and/or the processor (e.g., the processor 120 of FIG. 1) may detect user biometric information such as photoplethysmography, heart rate, oxygen saturation, and/or skin temperature, based on the emitted and detected light. Although not illustrated, electrode pad(s) contacting the user's body may be provided on the surface of the rear plate 393, and using the electrode pad(s) not illustrated, the electronic device 300 and/or the processor (e.g., the processor 120 of FIG. 1) may be able to detect user biometric information (e.g., an electrocardiogram).

According to various embodiments, the first cover plate 393a may include various decorative patterns. In an embodiment, the first cover plate 393a may transmit light to an area (hereinafter, referred to as a "transparent area TA1 or TA2) that faces at least the light emitting element(s) 355a or the photoelectric conversion element(s) 355b or 355c. For example, on the first cover plate 393a, an area (e.g., an area indicated by "TA1") corresponding to a path of light emitted by at least the light emitting element(s) 355a or an area (e.g., an area indicated by "TA2") corresponding to a path of light reflected by the user's body and incident on the photoelectric conversion element(s) 355b and 355c may be implemented as a transparent area. In some embodiments, the first cover plate 393a may include various types of patterns or decorations formed through surface processing, printing, coating, painting, deposition, and/or plating in an area that does not correspond to a path of emitted or incident light. In the illustrated embodiment, the first cover plate 393a may include a decorative pattern in which a boundary between the transparent areas TA1 and TA2 and the printed area is disposed concentrically. According to an embodiment, the decorative pattern may be implemented in various ways, and the entire first cover plate 393a may be made transparent.

According to various embodiments, the `transparent areas TA1 and TA2' may transmit light emitted by the light emitting element 353a or light received by the photoelectric conversion element(s) 355b and 355c while blocking light in the remaining wavelength bands. In an embodiment, even in an area indicated by the `transparent areas TA1 and TA2', it may be possible to block visible light while transmitting infrared or near-infrared rays. For example, the first cover plate 393a may function, at least partially, as a band-pass filter or a band-blocking filter.

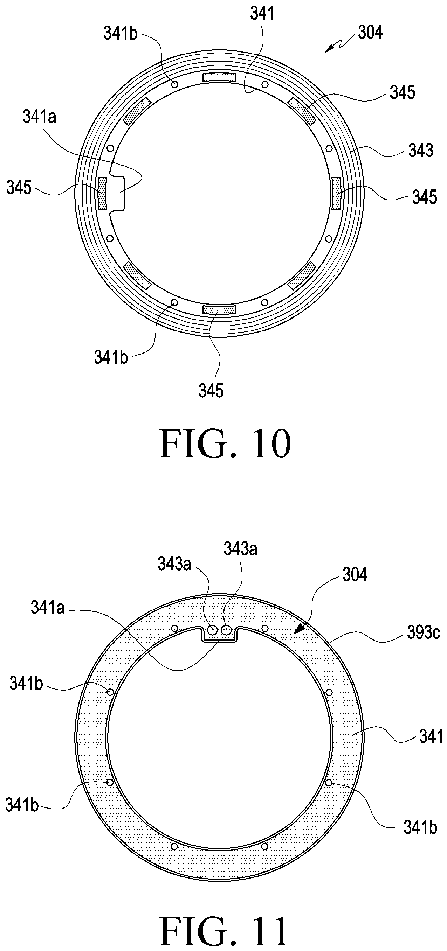

FIG. 10 is a plan view illustrating a coil assembly 304 (e.g., the coil assembly 304 of FIGS. 5 or 6) of an electronic device (e.g., the electronic device 101, 102, 104, 200, or 300 of FIGS. 1 to 4) according to various embodiments of the disclosure. FIG. 11 is a bottom view illustrating a coil assembly 304 of an electronic device 300 according to various embodiments of the disclosure, showing the coil assembly 304 coupled to the molding member 393c.

Referring to FIGS. 10 and 11, the coil assembly 304 may include a base plate 341, a coil 343 disposed on one surface of the base plate 341, a magnet 345 disposed on one surface of the base plate 341, and/or a plurality of conductive pads 343a disposed on the other surface of the base plate 341. According to an embodiment, the coil 343 may be formed by arranging a conducting wire on one surface of the base plate 341. For instance, the coil 343 may be formed on one surface of the base plate 341 by forming a metal layer on one surface of the base plate 341 through laminating, plating, printing, or deposition processes, or by removing a portion of the metal layer according to a process method. In another embodiment, the coil 343 may be formed on a separate synthetic resin film surface, and the synthetic resin film may be attached to one surface of the base plate 341.

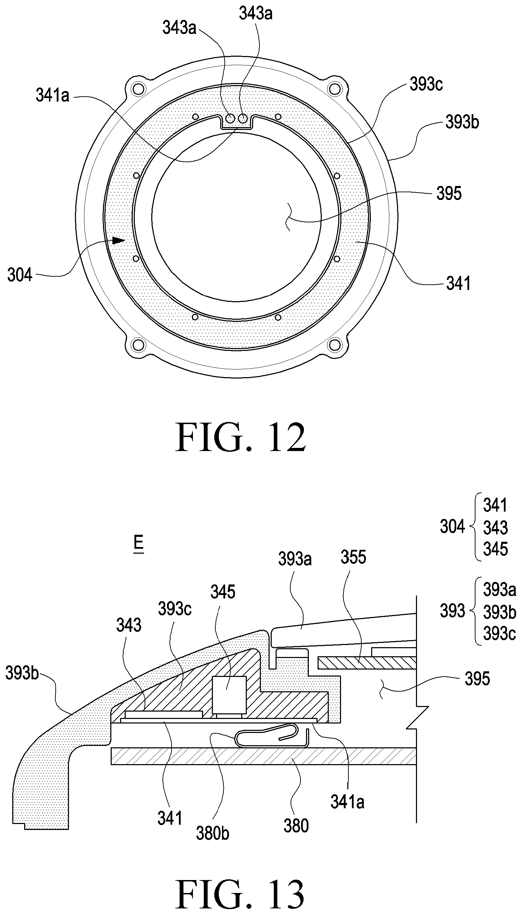

According to various embodiments, at least one magnet 345 may be disposed on one surface of the base plate 341 within an area surrounded by the coil 343. The magnet 345 may have a greater thickness than the coil 343 relative to the surface of the base plate 341. For example, in the shape of the electronic device 300 where the edges are thinner than the central portion, the coil 343 may be disposed closer to the edge side than the magnet 345. For example, referring to FIGS. 6 or 13, which will be described later, the magnet 345 may be disposed in an area or space between the coil 343 and the auxiliary circuit board 355 in an inclined direction with respect to the Z-axis direction. Consequently, the coil assembly 304 may be easily disposed in a space surrounded by the second cover plate 393b (e.g., a space at least partially surrounded by the curved space area A2 of FIG. 4), and the coil 343 may be disposed adjacent to the edge of the electronic device 300.

According to various embodiments, as the molding member 393c is molded, the coil 343 and/or the magnet 345 may be at least partially surrounded by the base plate 341 and the molding member 393c. According to an embodiment, the molding member 393c may be formed of a transparent or translucent synthetic resin, and may be coupled to the second cover plate 393b while substantially concealing or protecting the coil 343 and/or the magnet 345. For example, due to its curved shape, the coil assembly 304 may be disposed in a space that cannot be used for the arrangement of the printed circuit board 380, the auxiliary circuit board 355, and/or the battery 370, thereby enabling efficient use of the internal space of the electronic device 300.

According to various embodiments, the conductive pad(s) 343a may be disposed on the other surface of the base plate 341, allowing them to be exposed to the outside of the molding member 393c. In an embodiment, the base plate 341 may include an extending piece 341a that extends inward from a portion of an edge thereof, and the conductive pad(s) 343a may be disposed on the extending piece 341a on the other surface of the base plate 341. The conductive pad(s) 343a may be electrically connected to the coil 343 through a via conductor (not shown) that penetrates the base plate 341. Inside the electronic device 300, the conductive pad(s) 343a may be disposed to at least partially face the printed circuit board 380, which will be further described with reference to FIGS. 12 and 13.

According to various embodiments, the coil assembly 304 may further include a plurality of guide holes 341b. In a structure where the molding member 393c and the coil assembly 304 are coupled simultaneously with the molding of the molding member 393c by the insert injection molding method, the guide holes 341b may provide means for aligning the coil assembly 304. For example, the coil assembly 304 may be disposed or fixed at a designated position by the guide holes 341b in the mold, and the molding member 393c may be molded while the coil assembly 304 is substantially fixed in the mold.

FIG. 12 is a bottom view illustrating a state in which a coil assembly 304 is disposed on a rear plate 393 of an electronic device (e.g., the electronic device 101, 102, 104, 200, or 300 of FIGS. 1 to 4) according to various embodiments of the disclosure. FIG. 13 is an enlarged view illustrating a portion indicated by 'E' of FIG. 6.

Referring further to FIGS. 12 and 13, the conductive pad(s) 343a may be substantially exposed inside the rear plate 393, and may be disposed facing the printed circuit board 380 inside the electronic device 300. According to an embodiment, the connection member 380b (e.g., a C-clip) disposed on the printed circuit board 380 may contact the conductive pad(s) 343a, and the processor (e.g., the processor 120 of FIG. 1), the power management module (e.g., the power management module 188 of FIG. 1), and/or the wireless charging circuit may be substantially electrically connected to the coil 343 through the connection member 380b and/or the conductive pad(s) 343a, and may perform wireless communication using the coil 343 or charge the battery using the induced current generated by the coil assembly 304.

According to various embodiments, when the coil assembly 304, for example, the magnet 345 or the coil 343, is disposed on the auxiliary circuit board 355, the auxiliary circuit board 355 may be disposed further away from the rear plate 393 (e.g., the first cover plate 393a) than the position shown in FIG. 13. For example, the gap between the auxiliary circuit board 355 and the rear plate 393 may increase by the thickness or height of the magnet 345. According to various embodiments disclosed herein, the coil assembly 304 may be separated from the auxiliary circuit board 355 where various sensors are disposed, thus not affecting the arrangement of the auxiliary circuit board 355.

According to various embodiments, the coil assembly 304 may be disposed further away from the first cover plate 393a than the auxiliary circuit board 355 in the Z-axis direction. For example, sufficient space may be secured for placing the magnet(s) 345, and the auxiliary circuit board 355 may secure an area for placing a variety of sensors or be disposed closer to the first cover plate 393a. According to an embodiment, since the coil assembly 304 is disposed on the rear plate 393 (e.g., the molding member 393c), the coil assembly 304 may be in electrical contact with the printed circuit board 380 upon assembly completion. For example, a process of placing or assembling the coil assembly 304 in the molding member 393c or establishing an electrical connection with the printed circuit board 380, can be facilitated.

According to an embodiment of the disclosure, an electronic device (e.g., the electronic device 101, 102, 104, 200, or 300 of FIGS. 1 to 4 or 6) may comprise a rear plate (e.g., the rear plate 393 of FIG. 4 or 6) that includes a first cover plate (e.g., the first cover plate 393a of FIG. 4 or 6) and a second cover plate (e.g., the second cover plate 393b of FIG. 4 or 6) arranged to surround at least a portion of the first cover plate, a circuit board (e.g., the auxiliary circuit board 355 of FIGS. 4 or 5) disposed to face the first cover plate inside the rear plate, a molding member (e.g., the molding member 393c of FIGS. 4 or 6) disposed on an inner surface of the second cover plate inside the rear plate, and a coil assembly (e.g., the coil assembly 304 of FIGS. 4 to 6) at least partially embedded in the molding member.

According to various embodiments, the first cover plate, the circuit board, and the coil assembly may be sequentially disposed in a direction perpendicular to one surface of the first cover plate (e.g., the Z-axis direction of FIGS. 4 or 5).

According to various embodiments, when viewed from the direction perpendicular to one surface of the first cover plate, the coil assembly may be disposed to surround an area (e.g., the first area A1 or the opening area 395 of FIG. 4) in which the circuit board is disposed.

According to various embodiments, the circuit board may include at least one sensor (e.g., the sensor modules 176 and 211 of FIGS. 1 and 3, or a sensor in which the light emitting element 355a and the photoelectric conversion element(s) 355b and 355c of FIG. 6 are combined) disposed to face the first cover plate, and the at least one sensor may be configured to detect at least some light incident through the first cover plate from the outside.

According to various embodiments, the coil assembly may include a loop-shaped base plate (e.g., the base plate 341 of FIGS. 5 or 10) disposed to surround an area where the circuit board is disposed, when viewed from the direction perpendicular to one surface of the first cover plate, a coil (e.g., the coil 343 of FIGS. 5 or 10) disposed on one surface of the base plate facing the second cover plate and at least partially surrounded by the molding member, and at least one magnet (e.g., the magnet 345 of FIGS. 5 or 10) disposed on the one surface of the base plate and at least partially surrounded by the molding member.

According to various embodiments, the at least one magnet may be disposed in an area surrounded by the coil.

According to various embodiments, the coil assembly may further include a plurality of conductive pads (e.g., the conductive pads 343a of FIGS. 11 or 12) disposed on the other surface of the base plate facing away from the one surface, and the plurality of conductive pads may be electrically connected to the coil.

According to various embodiments, the electronic device may further include a side bezel structure (e.g., the side bezel structure 310 of FIGS. 4 or 6) including metal or polymer, and a front plate (e.g., the front plate 301 of FIGS. 4 or 6) disposed on one surface side of the side bezel structure, wherein the circuit board may be disposed in the space surrounded by the side bezel structure between the rear plate and the front plate.

According to various embodiments, according to various embodiments, the electronic device may further include a processor (e.g., the processor 120 of FIG. 1) or a communication module (e.g., the communication module 190 of FIG. 1), and the side bezel structure may include metal or polymer material. The processor or communication module may be configured to perform wireless communication using a metal material portion of the side bezel structure.

According to various embodiments, the electronic device may further include a battery (e.g., the battery 189 of FIGS. 1, 4, or 6) and a wireless charging circuit (e.g., a wireless charging circuit provided as part of the processor 120 or the power management module 188 of FIG. 1), wherein the wireless charging circuit may be configured to charge the battery using an induced current generated in the coil assembly.

According to various embodiments, the electronic device may further include at least one wearing member (e.g., the wearing members 250 and 260 of FIGS. 2 or 3) detachably coupled to the side bezel structure and configured to wear the side bezel structure or the electronic device on the user's body, and the rear plate may be disposed to face the user's body or contact the user's body while worn on the user's body.

According to various embodiments, the circuit board may include at least one sensor disposed to face the first cover plate, and the at least one sensor may be configured to detect at least a portion of user biometric information by passing through the first cover plate.

According to various embodiments, the second cover plate may have a circular or polygonal loop shape surrounding an opening area where the circuit board is disposed, and the first cover plate may be coupled to the second cover plate in the opening area while facing the circuit board.

According to various embodiments, the molding member or the coil assembly may be disposed around the opening area on the inner surface of the second cover plate.

According to various embodiments, the coil assembly may include a loop-shaped base plate disposed to surround an area where the circuit board is disposed, when viewed from a direction perpendicular to one surface of the first cover plate; a coil disposed on one surface of the base plate facing the second cover plate; and at least one magnet disposed on the one surface of the base plate, wherein the at least one magnet may be disposed between the opening area and the coil.

According to various embodiments of the disclosure an electronic device (e.g., the electronic device 101, 102, 104, 200, or 300 of FIGS. 1 to 4 or 6), which is a wearable electronic device, may include a housing (e.g., the housing 220 of FIG. 2) including a front plate (e.g., the front plate 301 of FIGS. 4 or 6) disposed to form a first surface, a rear plate (e.g., the rear plate 393 of FIGS. 4 or 6) disposed to form a second surface facing away from the first surface, and a side bezel structure (e.g., the side bezel structure 310 of FIGS. 4 or 6) disposed to surround a space between the front plate and the rear plate; at least one wearing member (e.g., the wearing member 250 or 260 of FIGS. 2 or 3) detachably coupled to the side bezel structure and configured to wear the side bezel structure or the electronic device on a user's body; a circuit board (e.g., the auxiliary circuit board 355 of FIGS. 4 or 5) disposed to face a first area (e.g., the first area A1 of FIG. 4) of the rear plate on the inner surface of the rear plate; a molding member (e.g., the molding member 393c of FIGS. 4 or 6) disposed to contact an inner surface of the rear plate in a curved area (e.g., the curved area A2 of FIG. 4) of the rear plate disposed around the first area; and a coil assembly (e.g., the coil assembly 304 of FIGS. 4, 5, or 10) including a coil (e.g., the coil 343 of FIGS. 5 or 10) at least partially surrounded by the molding member.

According to various embodiments, the circuit board may include at least one sensor (e.g., the sensor modules 176 and 211 of FIGS. 1 and 3, or a sensor in which the light emitting element 355a and the photoelectric conversion element(s) 355b and 355c of FIG. 6 are combined) disposed to face the first cover plate, and when worn on a user's body, the rear plate may be disposed so that at least the first area contacts the user's body, and the at least one sensor may be configured to detect at least a portion of light incident through the first area from the outside.

According to various embodiments, the coil assembly may further include a base plate (e.g., the base plate 341 of FIGS. 5 or 10) having the coil disposed on one surface thereof, and a magnet (e.g., the magnet 345 of FIGS. 5 or 10) disposed on the one surface of the base plate, and the magnet may be disposed at least partially in an area between the coil and the circuit board.

According to various embodiments, the wearable electronic device may further include a battery (e.g., the battery 189 of FIGS. 1, 4, or 6) and a wireless charging circuit (e.g., a wireless charging circuit provided as part of the processor 120 or the power management module 188 of FIG. 1), and the wireless charging circuit may be configured to charge the battery using the induced current generated by the coil assembly.

According to various embodiments, the wearable electronic device may further include a processor (e.g., the processor 120 of FIG. 1) or a communication module (e.g., the communication module 190 of FIG. 1). The side bezel structure may include metal or polymer material, and the processor or communication module may be configured to perform wireless communication using a metal material portion of the side bezel structure.

While detailed descriptions of specific embodiments have been provided in this disclosure, it is apparent to those skilled in the art that various modifications can be made without departing from the scope of the invention.

## Claims

1. An electronic device, comprising:
a rear plate including a first cover plate, and a second cover plate disposed to surround at least a portion of the first cover plate;
a circuit board disposed to face the first cover plate inside the rear plate;
a molding member disposed on an inner surface of the second cover plate inside the rear plate; and
a coil assembly at least partially embedded in the molding member.

2. The electronic device of claim 1, wherein the first cover plate, the circuit board, and the coil assembly are sequentially disposed in a direction perpendicular to one surface of the first cover plate.

3. The electronic device of claim 1, wherein when viewed from a direction perpendicular to one surface of the first cover plate, the coil assembly is disposed to surround an area where the circuit board is disposed.

4. The electronic device of claim 1, wherein the circuit board comprises at least one sensor disposed to face the first cover plate, and
wherein the at least one sensor is configured to detect at least a portion of light incident through the first cover plate from the outside.

5. The electronic device of claim 1, wherein the coil assembly comprises:
a loop-shaped base plate disposed to surround an area where the circuit board is disposed, when viewed from a direction perpendicular to one surface of the first cover plate;
a coil disposed on one surface of the base plate facing the second cover plate and at least partially surrounded by the molding member; and
at least one magnet disposed on the one surface of the base plate and at least partially surrounded by the molding member.

6. The electronic device of claim 5, wherein the at least one magnet is disposed in an area surrounded by the coil.

7. The electronic device of claim 5, wherein the coil assembly further comprises a plurality of conductive pads disposed on the other surface of the base plate facing away from the one surface, and
wherein the plurality of conductive pads are electrically connected to the coil.

8. The electronic device of claim 1, further comprising:
a side bezel structure including metal or polymer; and
a front plate disposed on one surface side of the side bezel structure,
wherein the circuit board is disposed in a space surrounded by the side bezel structure between the rear plate and the front plate.

9. The electronic device of claim 8, further comprising:
a processor or a communication module,
wherein the side bezel structure includes metal or polymer material, and
wherein the processor or the communication module is configured to perform wireless communication using a metal material portion of the side bezel structure.

10. The electronic device of claim 9, further comprising:
a battery; and
a wireless charging circuit,
wherein the wireless charging circuit is configured to charge the battery using an induced current generated by the coil assembly.

11. The electronic device of claim 8, further comprising:
at least one wearing member detachably coupled to the side bezel structure and configured to wear the side bezel structure or the electronic device on a user's body,
wherein the rear plate is disposed to face or contact a user's body while worn on the user's body.

12. The electronic device of claim 11, wherein the circuit board comprises at least one sensor disposed to face the first cover plate, and
wherein the at least one sensor is configured to detect at least a portion of user's biometric information through the first cover plate.

13. The electronic device of claim 1, wherein the second cover plate has a circular or polygonal loop shape that surrounds an opening area where the circuit board is disposed, and
wherein the first cover plate is coupled to the second cover plate in the opening area, while facing the circuit board.

14. The electronic device of claim 13, wherein the molding member or the coil assembly is disposed around the opening area on the inner surface of the second cover plate.

15. The electronic device of claim 13, wherein the coil assembly comprises:
a loop-shaped base plate disposed to surround an area where the circuit board is disposed, when viewed from a direction perpendicular to one surface of the first cover plate;
a coil disposed on one surface of the base plate facing the second cover plate; and
at least one magnet disposed on the one surface of the base plate,
wherein the at least one magnet is disposed between the opening area and the coil.
